Europäisches Patentamt

European Patent Office

Office européen des brevets

(19)

(11) Veröffentlichungsnummer: **0 283 782**

**A1**

# EUROPÄISCHE PATENTANMELDUNG

(21) Anmeldenummer: 88103236.1

(22) Anmeldetag: 03.03.88

(51) Int. Cl.⁴ **H04N 3/185**

(30) Priorität: 12.03.87 DE 3707915

(43) Veröffentlichungstag der Anmeldung:
28.09.88 Patentblatt 88/39

(84) Benannte Vertragsstaaten:
AT BE CH DE ES FR GB IT LI LU NL SE

(71) Anmelder: Deutsche Thomson-Brandt GmbH
Hermann-Schwer-Strasse 3 Postfach 1307
D-7730 Villingen-Schwenningen(DE)

(72) Erfinder: Dieterle, Franz
Sommerauerstrasse 31
D-7742 St. Georgen(DE)
Erfinder: Hartmann, Uwe
Tallardstrasse 15
D-7730 Villingen-Schwenningen(DE)
Erfinder: Mai, Udo
Mühleschweg 2
D-7730 Villingen-Schwenningen 23(DE)

(54) **Fernsehempfänger mit einem netztrennenden geregelten Schaltnetzteil.**

(57) Die Netztrennung von Fernsehempfängern bereitet oft Schwierigkeiten weil sie entweder unnötig
kostspielig ist oder auf technische Schwierigkeiten
stößt. Der Erfindung liegt die Aufgabe zugrunde eine
Netztrennung zu schaffen, die es erlaubt z.B. die
kostengünstige Wesselschaltung zu verwenden und
mit möglichst wenig Bauteileaufwand die Netztrennung zu ermöglichen.

Dies wird dadurch erreicht, daß die Horizontalendstufe (3), die Vertikalendstufe (25) einschließlich
Treiberstufen sowie der Modulator (9) für die Netzteilregelung, die Stufen zur Erzeugung der vertikalen und horizontale Sägezahnsignale (21, 22) der
Fehlerverstärker (24) für die Vertikalablenkung der
mit dem Netz verbundenen Seite des Schaltnetzteils
(2) und die Synchronisierungsschaltung (18) für die
Horizontal-und Vertikalablenkung mit den Oszillatoren für Horizontal-und Vertikalablenkung der netzgetrennten Seite des Schaltnetzteils zugeordnet sind.
Netztrennung für Fernsehempfänger.

EP 0 283 782 A1

# Fernsehempfänger mit einem netztrennenden geregelten Schaltnetzteil

Die Erfindung betrifft einen Fernsehempfänger mit einem netztrennenden geregelten Schaltnetzteil.

Es ist bekannt, in Fernsehempfänger Netzteile, insbesondere Schaltnetzteile, zur Netztrennung zu verwenden. So ist z.B. ein frei schwingendes Netzteil bekannt, welches auf der Netzseite geregelt wird. Derartige Netzteile bringen jedoch Störungen in Form von unsynchronen Streifen in das Bild auf der Wiedergaberöhre eines Fernsehempfängers. Diese Störungen sind nur mit teuren Maßnahmen, wie z.B. Abschirmungen zu beseitigen. Vorteilhafter sind dagegen synchronisierte Netzteile, die diese Störungen nicht besitzen, wobei die Horizontal-und Vertikalablenkschaltungen auf der netzgetrennten Seite liegen. Es ist hierbei ein netztrennendes Koppelelement notwendig, das die Synchronisationssignale für das Netzteil auf die mit dem Netz verbundene Seite des Schaltnetzteils bringt. Bei dieser Anordnung benötigt man jedoch zwei Schalter, einen für die Ablenkfunktion und einen für die Netzteilfunktion.

Es sind auch Fernsehempfänger bekannt, bei denen die Horizontalablenkschaltung und die Netzteilschaltung in einer Baueinheit zusammengefasst sind. Eine solche Schaltung z.B. eine Wessel-Schaltung besitzt den Vorteil, daß nur ein Leistungstransistor mit Kühlblech und eine Treiberschaltung für Netzteilfunktion und Horizontal-Ablenkfunktion ausreichen. Wird die Vertikalablenkschaltung dann weiterhin auf der netzgetrennten Seite belassen, läuft die Netztrennung durch die Ablenkeinheit, in der die Horizontalablenkspulen der Netzseite und die Vertikalablenkspulen der netzgetrennten Seite zugeordnet sind. Eine solche Anordnung bringt Probleme mit der Einhaltung der VDE-Vorschriften mit sich und ist aus diesem Grunde nicht einfach zu realisieren.

Der Erfindung liegt die Aufgabe zugrunde, einen Fernsehempfänger derart netzgetrennt zu gestalten, daß er kostengünstig ist, indem die Vorteile z.B. der Wessel-Schaltung ausgenutzt werden. Diese Aufgabe wird durch die im Patentanspruch angegebene Erfindung gelöst. Die Erfindung bringt den Vorteil, daß trotz des geringen Bauteileaufwandes durch Wahl einer besonderen Schnittstelle zwischen Netzseite und netzgetrennter Seite sämtliche Möglichkeiten des Anschlusses von Peripheriegeräten erzielbar sind. Der Bauteileaufwand entspricht etwa dem von nicht netzgetrennten Fernsehgeräten.

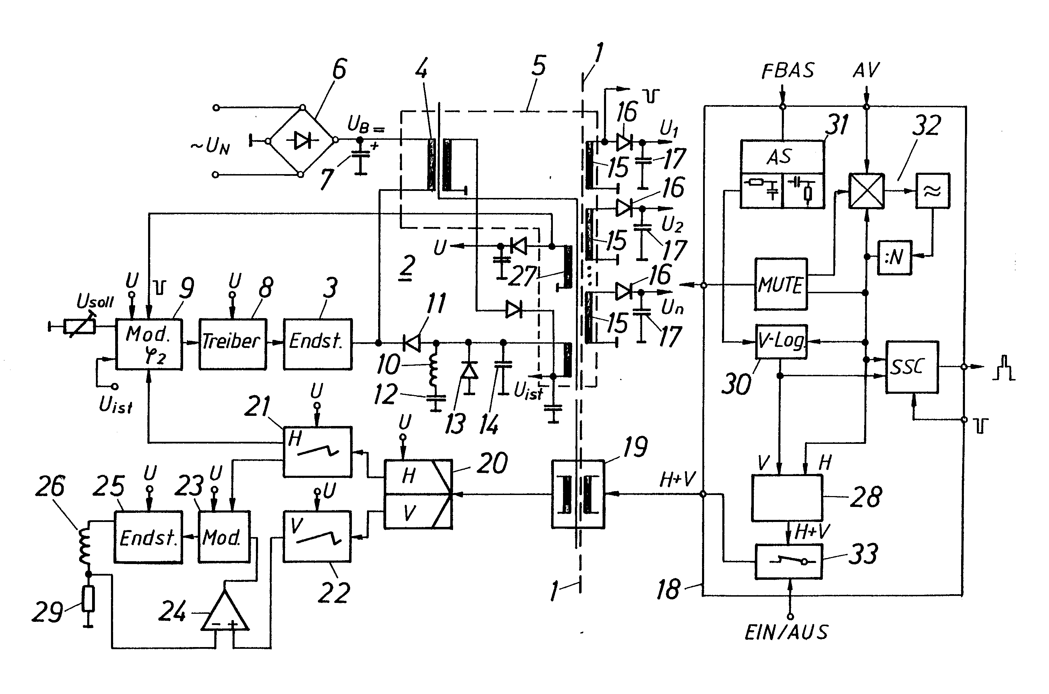

Nachstehend wird die Erfindung mit Hilfe der Zeichnung beschrieben.

Mit 1 ist die Netztrennlinie bezeichnet, die die galvanische Trennung der nachfolgend beschriebenen Baugruppen symbolisiert. Auf der Netzseite befindet sich die kombinierte Netzteil-Horizontalablenkschaltung 2. Diese besteht aus einer Endstufe 3, die über die Wicklung 4 eines Transformators 5 eine aus der Netzwechselspannung UN mit Hilfe eines Gleichrichters 6 gleichgerichtete am Siebkondensator 7 erzeugte Gleichspannung UB periodisch nach Masse schaltet. Die Endstufe 3 wird von einer Treiberstufe 8 angesteuert, welche aus einem Modulator 9 ein Ansteuersignal erhält. Das Ansteuersignal ist ein pulsbreitemoduliertes Signal, welches in Abhängigkeit von der erzeugten Netzteilspannung $U_{ist}$ und dem Phasenvergleich Phi2 zwischen Zeilenrücklaufimpuls und horizontaler Sägezahnspannung verändert wird. Dies geschieht in der Modulatorstufe 9. Die Endstufe 3 erzeugt den Horizontalablenkstrom durch die Ablenkspule 10, welche in bekannter Weise über die Diode 11 an die Endstufe 3 angekoppelt ist und über den Tangenskondensator 12 mit dem Bezugspotential verbunden ist. Parallel zur Ablenkspule 10 mit Tangenskondensator 12 ist die Rücklaufdiode 13 und der Rücklaufkondensator 14 geschaltet. Das Netzteil 2 arbeitet als von den Synchronimpulsen des Fernsehsignals FBAS synchronisiertes Netzteil, welches über n Sekundärwicklungen 15 und n Gleichrichter 16 an n Kondensatoren 17 die erforderlichen Betriebsspannungen U1 bis Un für den netzgetrennten Teil des Fernsehempfängers. Aus einer netztrennenden Koppelschaltung 19 wird ein horizontalfrequentes und vertikalfrequentes Steuersignal H + V entnommen. Dieses gelangt über eine Weiche 20 einerseits mit seinem H-Anteil an einen horizontalfrequenten Sägezahngenerator 21 und mit seinem V-Anteil an einen vertikalfrequenten Sägezahngenerator 22. Ein Ausgang des horizontalfrequenten Sägezahngenerators 21 ist an einen Eingang eines Impulsbreitenmodulators 23 geschaltet, dessen anderem Eingang die vertikalfrequenten sägezahnförmigen Signale aus dem Generator 22 gegebenenfalls über einen Verstärker 24 zugeführt werden. Die Impulse aus dem Impulsbreitenmodulator 23 steuern die Vertikalendstufe 25 an, welche die Vertikalablenkspule 26 speist. An einem in Serie zu den Ablenkspulen gegen das Bezugspotential geschalteten Meßwiderstand 29 kann ein dem Ablenkstrom proportionaler Ist-Wert abgegriffen werden, der dem invertierenden Eingang des Fehler-Verstärkers 24 zugeführt wird. Das sägezahnförmige Signal aus dem Generator 21 wird dem Modulator 9 zusammen mit dem aus der Wicklung 27 des Transformators 5 entnommene Vergleichsimpuls zur Regelung der Ausschaltflanke des die Endstufe 3 ansteuernden Signals zugeführt. Die Einschaltflanke wird in Abhängigkeit von der Spannung $U_{ist}$ des Netzteils verschoben. Durch die erfindungsgemäß gezogene Netztrennlinie 1 kann eine sehr kostengünstige Netztrennung erzielt werden.

Zur Synchronisierung der Netzteil-Zeilenstufe 2 dient eine vom Fernsehsignal FBAS synchronisierte Schaltung 18, die auf der netzgetrennten Seite des Fernsehempfängers angeordnet ist. Diese Schaltung erzeugt das kombinierte Steuer-Signal, bestehend aus Horizontal-und Vertikalimpulsen H und V. Dazu wird das V-Signal in einer Logikschaltung 30 erzeugt, der einerseits das vertikalfrequente Synchronsignal aus dem Amplitudensieb 31 und andererseits das horizontalfrequente Synchronsignals aus der PLL-Schaltung 32 zugeführt wird. In einer Verknüpfungsschaltung 28 wird das kombinierte H-V-Signal erzeugt. Es ist jedoch auch möglich diese H-und V-Signale getrennt über je eine netztrennende Koppelschaltung zu übertragen. Durch eine Unterbrechung dieser Signale mit Hilfe einer Schaltstufe 33 kann das Fernsehempfangsgerät in einfacher Weise ausgeschaltet werden. Dieses kombinierte Signal gelangt über die netztrennende Koppelschaltung 19 auf die Primärseite des Fernsehempfängers. Die netztrennende Koppelschaltung 19 kann z.B. aus einem Übertrager oder aus einem optoelektronischen Bauelement bestehen. Auf der netzgetrennten Seite befindet sich die Erzeugung des MUTE-Signals zur Stummsteuerung des Empfängers und des Super-Sand-Castle-Impulses SSC sowie weiterer in dem Fernsehempfänger benötigter Impulse wie z.B. Key-Impulse zur getasteten Regelung. Peripheriegeräte, die eine direkten Massekontakt zu diesen Signalen benötigen, können z.B. über die SCART-Buchse angeschlossen werden. Die Innenschaltung des Schaltungsteils 18 entspricht im Wesentlichen einem Teil der integrierten Schaltung TEA 2029 von CSF.

**Ansprüche**

1. Fernsehempfänger mit einem netztrennenden geregelten Schaltnetzteil, **dadurch gekennzeichnet**, daß die Horizontalendstufe (3) und die Vertikalendstufe (25) einschliesslich den diese ansteuernden Treiberstufen (8, 23) sowie der Modulator (9) für die Netzteil-Regelung (9), die Stufen zur Erzeugung des vertikalen und horizontalen Sägezahnsignals (21, 22), der Fehlerverstärker (24)für die Vertikalablenkung der mit dem Netz verbundenden Seite des Schaltnetzteils (2) und die Synchronisierungsschaltung (18) sowie die Oszillatoren für Horizontal-und Vertikalablenkung der netzgetrennten Seite des Schaltnetzteils (2) zugeordnet sind.

2. Fernsehempfänger nach Anspruch 1, **dadurch gekennzeichnet**, daß die Übertragung der Ansteuersignale (H, V) für die Horizontal-und Vertikalablenkung und für das Schaltnetzteil (2) von der netzgetrennten Seite auf die mit dem Netz verbundenen Seite mit Hilfe einer netztrennenden Koppelschaltung (19) erfolgt.

3. Fernsehempfänger nach Anspruch 2, **dadurch gekennzeichnet**, daß die netztrennende Koppelschaltung (19) aus einem Übertrager besteht.

4. Fernsehempfänger nach Anspruch 2, **dadurch gekennzeichnet**, daß die netztrennende Koppelschaltung (19) aus einem optoelektronischen Element besteht.

**Europäisches Patentamt**

# EUROPÄISCHER RECHERCHENBERICHT

Nummer der Anmeldung

EP 88 10 3236

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | WO-A-8 605 345 (DEUTSCHE THOMSON-BRANDT) * Seite 4, Zeilen 6-10; Seite 5, Zeilen 8-17; Anspruch 1; Figur 2 * --- | 1-4 | H 04 N 3/185 |
| A | EP-A-0 083 533 (THOMSON-BRANDT) * Seite 3, Zeilen 10-23; Figur * --- | 1,2,4 | |
| A | DE-A-3 227 152 (STANDARD ELEKTRIK LORENZ) * Anspruch 1; Figur * --- | 1-3 | |
| A | FR-A-2 294 600 (BLAUPUNKT-WERKE) ----- | 1 | |

|  | | | RECHERCHIERTE SACHGEBIETE (Int. Cl.4) |
|---|---|---|---|
| | | | H 04 N |

Der vorliegende Recherchenbericht wurde für alle Patentansprüche erstellt

| Recherchenort | Abschlußdatum der Recherche | Prüfer |
|---|---|---|
| DEN HAAG | 16-06-1988 | KLUZ F.M. |